# FASCICULE DE BREVET EUROPEEN

(11) **EP 1 154 907 B1**
(45) Date de publication et mention de la délivrance du brevet: **04.12.2002**
(21) Numéro de dépôt: 99948882.8
(22) Date de dépôt: 28.09.1999
(51) Int. Cl.: B60C 9/22, B60C 9/20

(54) **PNEUMATIQUE POUR MOTOCYCLE PRESENTANT UNE ARMATURE DE SOMMET AVEC NAPPE D'ELEMENTS CIRCONFERENTIELS**
MOTORRADREIFEN MIT IN UMFANGSRICHTUNG ORIENTIERTEN VERSTÄRKUNGSELEMENTEN IN DER GÜRTELSTRUKTUR
MOTORCYCLE TYRE WITH CROWN REINFORCEMENT HAVING A PLY OF CIRCUMFERENTIAL REINFORCING ELEMENTS

(30) Priorité: 19.02.1999 FR 9902146
(43) Date de publication de la demande: 21.11.2001
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: CLAUZADE, Catherine, F-63370 Lempdes (FR); PIERRE, Christian, F-63110 Beaumont (FR); VALLE, Alain, F-63118 Cebazat (FR)
(74) Mandataire: Diernaz, Christian
(86) Numéro de dépôt international: EP9907183
(87) Numéro de publication internationale: WO00048851

(56) Documents cités:
- EP-A- 0 456 933
- EP-A- 0 635 383
- FR-A- 2 561 588
- US-A- 5 301 730
- US-A- 5 385 193
- US-A- 5 529 102

## Description

La présente invention concerne un pneumatique destiné à équiper un véhicule à deux roues et plus particulièrement un motocycle.

Comme dans le cas de tous les autres pneumatiques, on assiste à une radialisation des pneumatiques pour motos, l'architecture de tels pneumatiques comprenant une armature de carcasse formée d'une ou deux nappes d'éléments de renforcement faisant avec la direction circonférentielle un angle pouvant être compris entre 75° et 90°, ladite armature de carcasse étant radialement surmontée d'une armature de sommet formée au moins d'éléments de renforcement généralement textiles.

De nombreuses architectures d'armature de sommet ont été proposées, selon que le pneumatique soit destiné à la monte à l'avant de la moto, soit destiné à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour d'améliorer la résistance à l'usure, et consiste dans l'utilisation d'au moins deux nappes de sommet d'éléments de renforcement parallèles entre eux dans chaque nappe mais croisés d'une nappe à la suivante en faisant avec la direction circonférentielle des angles aigus, de tels pneumatiques étant plus particulièrement adaptés pour l'avant des motos. Les dites deux nappes de sommet peuvent être surmontées radialement d'au moins une nappe d'éléments circonférentiels, généralement obtenus par enroulement hélicoïdal d'une bandelette d'au moins un élément de renforcement enrobé de caoutchouc. Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Le document EP 0 456 933 Al, en vue de conférer à un pneumatique pour moto une excellente stabilité à grande vitesse ainsi qu'une excellente propriété de contact avec le sol, enseigne de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe , la plus proche radialement de la bande de roulement étant composée de câbles enroulés hélicoïdalement dans la direction circonférentielle.

Le brevet US 5 5529 102 décrit un pneumatique pour motos dont les nappes de sommet, formées d'éléments croisés avec un angle pouvant être compris entre 16° et 30°, sont surmontées d'une nappe d'éléments de renforcement en polyamide aliphatique pouvant être radiaux. Quant au brevet US 5 301 730, correspondant au préambule de la revendication 1, qui en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

De tels pneumatiques permettent, en même temps que l'augmentation de la motricité, de conserver de bonnes propriétés de vitesse, ce qui rend lesdits pneumatiques particulièrement adaptés pour les épreuves sportives sur circuit de compétition. Par contre, l'emploi de polyamide aromatique comme matériau des éléments de renforcement des deux nappes croisées en armature de sommet pour motos ne permet pas d'obtenir une endurance de ladite armature de sommet compatible avec une utilisation prolongée sur route : les éléments de renforcement croisés ne résistent pas à la fatigue et le nombre de cycles effectués étant insuffisant sans qu'il soit possible d'affirmer les causes d'une telle déchéance.

L'invention a pour but de remédier à de tels inconvénients en améliorant l'endurance des pneumatiques pour motos, sans détruire pour autant les autres propriétés, nécessaires à la satisfaction des utilisateurs roulant sur route.

Conformément à l'invention, un pneumatique pour motocycle comportant une bande de roulement fortement convexe, réunie par deux flancs de faible hauteur à deux bourrelets, chaque bourrelet étant renforcé par un élément annulaire inextensible autour duquel est ancrée une armature de carcasse formée d'éléments de renforcement textiles faisant avec la direction circonférentielle un angle compris entre 70° et 90°, ladite armature de carcasse étant radialement surmontée d'une armature de sommet formée d'au moins une nappe d'éléments de renforcement circonférentiels, et de deux nappes d'éléments de renforcement en matériau textile, croisés d'un nappe à la suivante en faisant avec la direction circonférentielle des angles compris entre 65° et 85°, caractérisé en ce que lesdits éléments croisés sont des câbles en polyamide aliphatique ou en polyester et dont le module d'élasticité est supérieur à 1 500 MPa, les éléments circonférentiels étant des câbles en polyamide aromatique dont le module d'élasticité en tension est au moins égal à 10 000 MPa, la nappe d'éléments circonférentiels étant située radialement entre l'armature de carcasse et les deux nappes d'éléments croisés.

Des éléments de renforcement sont dits circonférentiels s'ils font avec la direction circonférentielle un angle compris entre - 5° et + 5°.

On appelle module d'élasticité d'un élément de renforcement le module sous tension d'un élément de renforcement prélevé sur le pneumatique vulcanisé, ledit module étant un module sécant mesuré pour un allongement relatif compris entre 1 % et 5 %.

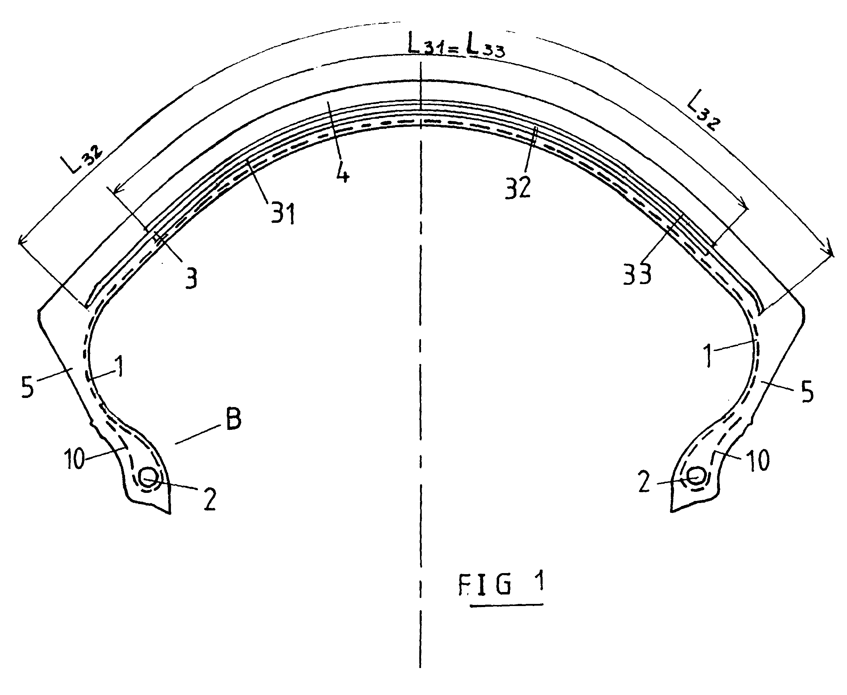

Les caractéristiques et avantages de l'invention seront plus précisément détaillés dans la description qui suit et qui se réfère au dessin, comportant une unique figure 1 illustrant à titre non limitatif un exemple d'exécution.

La bande de roulement (4) du pneumatique P de dimension 180/55 ZR 17 pour position arrière de moto est fortement arrondie et se trouve réunie à deux bourrelets B par l'intermédiaire de deux flancs (5). Chaque bourrelet B est renforcé par une tringle (2), autour de laquelle est ancrée par enroulement une armature de carcasse (1) formée d'une seule nappe (1) de câbles radiaux en polyamide aliphatique, avec formation des retournements (10). Ladite armature de carcasse radiale (1) est radialement surmontée d'une armature de sommet (3), formée de trois nappes (31, 32, 33). La nappe (31) radialement la plus proche de l'axe de rotation du pneumatique est une nappe de câbles 167/2 d'une part en polyamide aromatique et d'autre part quasi-circonférentiels, le très faible angle que font lesdits câbles avec la direction circonférentielle provenant du fait que ladite (31) est obtenue par enroulement hélicoïdal des câbles. Radialement à l'extérieur de la nappe (31) sont disposées deux nappes (32, 33) de câbles en polyamide aliphatique, parallèles entre eux dans chaque nappe (32, 33) et croisés d'une nappe (32) à la suivante (33) en faisant avec la direction circonférentielle des angles α et β,égaux entre eux dans le cas décrit et à 75°, lesdits angles pouvant effectivement être légèrement différents entre eux. Les largeurs respectives L₃₁, L₃₂, L₃₃ des nappes de sommet (31, 32, 33) sont égales à 198 mm, 210 mm et 198 mm (les largeurs mesurées étant les largeurs développées).

Le pneumatique conforme à l'invention, telle que décrit ci-dessus, a été comparé lors de différents tests d'une part à un pneumatique de même constitution mais dont les deux nappes croisées étaient formés de câbles faisant avec la direction circonférentielle un angle de 45°, et d'autre part à un pneumatique, dont l'armature de sommet ne comporte qu'une nappe d'éléments circonférentiels, et couramment utilisé à l'arrière d'une moto. Les différents critères observés sont évalués soit par une mesure objective soit par une appréciation subjective : que ce soit mesure ou appréciation, il est attribué la note 100 au pneumatique témoin dont les nappes de sommet sont à 45°, la note obtenue par le pneumatique de l'invention et/ou le pneumatique usuel étant inférieure si ledit pneumatique se montre inférieur au pneumatique témoin et supérieure si ledit pneumatique est supérieur au pneumatique témoin. Les essais sont dans un premier temps conduits avec le même pneumatique avant et les comparaisons entre les trois pneumatiques se font à l'arrière de la moto. Le tableau I ci-dessous résume lesdits premiers essais.

| | STABILITE | | USURE | ENDURANCE | |
|---|---|---|---|---|---|
| | EN LIGNE DROITE | NOMBRE EN COURBE | CIRCUIT VIRAGEUX | DE CYCLES | CONFORT |
| 90°/0° | 160 | 70 | 78 | 200 | 150 |
| 90°/0°/45°/145° | 100 | 100 | 100 | 100 | 100 |
| 90°/0°/75°/75° | 140 | 95 | 100 | 190 | 140 |

Comme on peut le constater, l'endurance du pneumatique conforme à l'invention est très nettement améliorée (du simple au double) et se montre équivalente à l'endurance obtenue avec un pneumatique arrière usuel, tout en présentant par rapport à ce dernier un énorme avantage en usure sur circuit virageux. Par ailleurs et de manière inattendue, le pneumatique conforme à l'invention présente un avantage certain en stabilité en ligne droite tout en conservant une bonne stabilité en courbes, stabilité en ligne droite qui se juge par un amortissement du louvoiement de la moto après excitation du sol ou du pilote. Il présente aussi un avantage non négligeable en confort, qui se juge surtout par les trépidations, retours d'informations en provenance du sol, ressenties par le pilote au guidon ou au niveau de la selle de la moto. Lesdits avantages sont obtenues sans qu'il y ait perte de tenue à la vitesse.

Un pneumatique conforme à l'invention a été essayé à l'avant du véhicule, le moyeu arrière étant équipé d'un pneumatique usuel à l'arrière dit (90°/0°), et comparé d'une part à un pneumatique couramment utilisé à l'avant d'une moto, c'est-à-dire un pneumatique dont l'armature de sommet est composée de deux nappes, les éléments de renforcement des dites deux nappes étant respectivement orientés par rapport à la direction circonférentielle des angles 25°/25°, et d'autre part à un pneumatique dit 90°/0°. Le tableau II ci-dessous résume les résultats obtenus, les critères de jugement étant, de manière évidente différents en ce qui concerne les tests subjectifs :

| | STABILITÉ PRÉCISION PRÉCISION VIBRATIONS TRAJECTOIRE | CONFORT VIBRATIONS GUIDON | USURE USURE |
|---|---|---|---|
| 90°/0° | 60 | 200 | 50 |
| 90°/25°/25° | 100 | 100 | 100 |
| 90°/0°/75°/75° | 90 | 180 | 90 |

Le pneumatique conforme à l'invention procure donc en monte avant, de manière inattendue, des progrès substantiels et surtout appréciés en confort : en particulier le pilote ne ressent pratiquement de vibrations en rotation dans le guidon ou shimmy, vibrations qui rendent la conduite très dangereuse et pénible, alors que la résistance à l'usure n'est pas pénalisée et que la tenue à grande vitesse est améliorée.

La combinaison de caractéristiques des pneumatiques conformes à l'invention conduit à un compromis de propriétés plus adapté à un usage sur route, sans pour cela pénaliser les performances de ce type d'architecture de sommet que sont la résistance à l'usure et la tenue à grande vitesse.

## Revendications

1. Pneumatique pour motocycle comportant une bande de roulement (4) fortement convexe, réunie par deux flancs (5) de faible hauteur à deux bourrelets B, chaque bourrelet B étant renforcé par un élément annulaire inextensible (2) autour duquel est ancrée une armature de carcasse (1) formée d'éléments de renforcement textiles faisant avec la direction circonférentielle un angle compris entre 70° et 90°, ladite armature de carcasse (1) étant radialement surmontée d'une armature de sommet (3) formée d'au moins une nappe (31) d'éléments de renforcement circonférentiels, cette dernière (31) étant située radialement entre l'armature de carcasse (1) et la nappe (33) de l'armature de sommet (3) radialement la plus à l'extérieur, et l'armature de sommet (3) se composant en outre de deux nappes (32, 33) d'éléments de renforcement en matériau textile, croisés d'un nappe à la suivante, **caractérisé en ce que** lesdits éléments croisés font avec la direction circonférentielle des angles compris entre 65° et 85°.

2. Pneumatique selon la revendication 1, **caractérisé en ce que** les éléments de renforcement des nappes (32, 33) orientés aux angles compris entre 65° et 85°, sont des câbles dont le module d'élasticité est supérieur à 1 500 MPa.

3. Pneumatique selon l'une des revendications 1 ou 2, **caractérisé en ce que** les éléments circonférentiels de la nappe (31) sont des câbles dont le module d'élasticité en tension est au moins égal à 10 000 MPa.

4. Pneumatique selon l'une des revendications 1 à 3, **caractérisé en ce que** les éléments de renforcement des nappes (32, 33) sont des câbles en polyamide aliphatique ou en polyester.

5. Pneumatique selon l'une des revendications 1 à 4, **caractérisé en ce que** les éléments circonférentiels de la nappe (31) sont des câbles en polyamide aromatique.

6. Pneumatique selon la revendication 1, **caractérisé en ce que** la nappe (31) d'éléments de renforcement circonférentiels est située entre l'armature de carcasse et les nappes (32, 33) d'éléments en matériau textile, croisés d'un nappe à la suivante.

## Claims

1. A motorcycle tyre comprising a highly convex tread (4), joined by two sidewalls (5) of low height to two beads B, each bead B being reinforced by an inextensible annular element (2) around which is anchored a carcass reinforcement (1) formed of textile reinforcing elements forming with the circumferential direction an angle of between 70° and 90°, said carcass reinforcement (1) being radially surmounted by a crown reinforcement (3) formed of at least one ply (31) of circumferential reinforcing elements, the latter (31) being located radially between the carcass reinforcement (1) and the radially outermost ply (33) of the crown reinforcement (3), and the crown reinforcement (3) being furthermore composed of two plies (32, 33) of reinforcing elements of textile material, which are crossed from one ply to the next, **characterised in that** said crossed elements form with the circumferential direction angles of between 65° and 85°.

2. A tyre according to Claim 1, **characterised in that** the reinforcing elements of the plies (32, 33) oriented at angles of between 65° and 85° are cables having an elasticity modulus greater than 1,500 MPa.

3. A tyre according to one of Claims 1 or 2, **characterised in that** the circumferential elements of the ply (31) are cables having an elasticity modulus in tension of at least 10,000 MPa.

4. A tyre according to one of Claims 1 to 3, **characterised in that** the reinforcing elements of the plies (32, 33) are cables of aliphatic polyamide or polyester.

5. A tyre according to one of Claims 1 to 4, **characterised in that** the circumferential elements of the ply (31) are cables of aromatic polyamide.

6. A tyre according to Claim 1, **characterised in that** the ply (31) of circumferential reinforcing elements is located between the carcass reinforcement and the plies (32, 33) of elements of textile material, which are crossed from one ply to the next.

## Patentansprüche

1. Motorradreifen, der eine stark konvexe Lauffläche (4) aufweist, die durch zwei Flanken (5) mit geringer Höhe mit zwei Wülsten B vereint ist, wobei jeder Wulst B durch ein kreisringförmiges, undehnbares Element (2) verstärkt ist, rund um welches eine Karkassenbewehrung (1) verankert ist, die aus Verstärkungselementen aus Textilmaterial gebildet ist, die mit der Umfangsrichtung einen Winkel bilden, der zwischen 70° und 90° liegt, wobei radial über der genannten Karkassenbewehrung (1) eine Scheitelbewehrung (3) angebracht ist, die aus mindestens einer Lage (31) aus Umfangs-Verstärkungselementen gebildet ist, wobei diese letztgenannte radial zwischen der Karkassenbewehrung (1) und der Lage (33) der Scheitelbewehrung (3) gelegen ist, die radial am weitesten außenliegt, und wobei sich die Scheitelbewehrung (3) außerdem aus zwei Lagen (32, 33) aus Verstärkungselementen aus Textilmaterial zusammensetzt, die von einer Lage zur folgenden überkreuz laufen, **dadurch gekennzeichnet, daß** die genannten, über Kreuz laufenden Elemente zur Umfangsrichtung Winkel bilden, die zwischen 65° und 85° liegen.

2. Reifen nach Anspruch 1, **dadurch gekennzeichnet, daß** die Verstärkungselemente der Lagen (32, 33), die unter Winkeln ausgerichtet sind, die zwischen 65° und 85° liegen, Seile sind, deren Elastizitätsmodul größer ist als 1 500 MPa.

3. Reifen nach einem der Ansprüche 1 oder 2, **dadurch gekennzeichnet, daß** die Umfangselemente der Lage (31) Seile sind, deren Zug-Elastizitätsmodul mindestens 10 000 MPa beträgt.

4. Reifen nach einem der Ansprüche 1 bis 3, **dadurch gekennzeichnet, daß** die Verstärkungselemente der Lagen (32, 33) Seile aus aliphatischem Polyamid oder aus Polyester sind.

5. Reifen nach einem der Ansprüche 1 bis 4, **dadurch gekennzeichnet, daß** die Umfangselemente der Lage (31) Seile aus aromatischem Polyamid sind.

6. Reifen nach Anspruch 1, **dadurch gekennzeichnet, daß** die Lage (31) aus Umfangs-Verstärkungselementen zwischen der Karkassenbewehrung und den Lagen (32, 33) aus Elementen aus Textilmaterial liegt, die von einer Lage zur folgenden überkreuz liegen.
